# EUROPÄISCHE PATENTSCHRIFT

(11) **EP 2 853 019 B1**
(45) Veröffentlichungstag und Bekanntmachung des Hinweises auf die Patenterteilung: **24.11.2021**
(21) Anmeldenummer: 12725307.8
(22) Anmeldetag: 23.05.2012
(51) Int. Cl.: H02K 5/10, H02K 5/124, H02K 5/15, H02K 7/116

(54) **ELEKTRISCHE MASCHINE**
ELECTRICAL MACHINE
MACHINE ÉLECTRIQUE

(43) Veröffentlichungstag der Anmeldung: 01.04.2015
(73) Patentinhaber: Baumüller Nürnberg GmbH, 90482 Nürnberg (DE)
(72) Erfinder: VEEH, Michael, 97271 Kleinrinderfeld (DE)
(74) Vertreter: FDST Patentanwälte
(86) Internationale Anmeldenummer: PCT/EP2012/002200
(87) Internationale Veröffentlichungsnummer: WO 2013/174400

(56) Entgegenhaltungen:
- EP-A2- 0 363 305
- JP-A- 60 020 740
- US-A- 3 897 178
- US-B1- 6 376 949
- None

## Beschreibung

Die Erfindung betrifft eine elektrische Maschine mit daran angekoppeltem Getriebe und mit einem Maschinengehäuse sowie mit einem Flanschlagerschild mit einer Wellendurchführöffnung für eine Maschinenwelle. Unter elektrische Maschine wird hierbei insbesondere ein Elektromotor verstanden. Die elektrische Maschine kann jedoch auch ein Generator sein.

Eine derartige elektrische Maschine weist üblicherweise ein Maschinengehäuse sowie die Wellenenden der den Rotor (Anker) tragenden Maschinenwelle drehbeweglich abstützende Lager auf, die vom das Maschinengehäuse stirnseitig abdeckenden Lagerschilden aufgenommen sind. Dabei ist das als A-Lager (A-Lagerschild) bezeichnete abtriebsseitige Wellenende in der Regel über ein Flanschlagerschild mit einer Wellendurchführung nach Außen geführt.

Die Maschinenwelle bzw. die Motorwelle eines solchen Elektromotors, beispielsweise eines Drehstrom-Synchronmotors, kann über ein Getriebe an ein weiteres Aggregat, beispielsweise eine Pumpe, gekoppelt sein. Der Einsatz einer derartigen servobetriebenen Hydraulikpumpe (Hydroaggregat) erfordert häufig eine vertikale Anordnung oder Einbaulage des Elektromotors mit nach oben verbauter Motorwelle, die über die Wellendurchführung zum Getriebe geführt ist. Die Wellendurchführung, an der die Maschinenwelle aus dem Maschinengehäuse austritt, bildet einen gewissen Schwachpunkt, da hierüber Flüssigkeit in Form beispielsweise eines Schmierstoffes aus dem Getriebe in den Innenraum des Motor- bzw. Maschinengehäuses eindringen, wenn die Dichtheit der Wellendurchführung, insbesondere nach Ablauf deren Lebensdauer, nicht mehr sichergestellt ist. Das zu vermeidende Eindringen derartiger Flüssigkeiten in den Gehäuseinnenraum der Maschine kann auch durch eine Saugwirkung in Folge thermischer Effekte bedingt sein.

Die JP 60 020740 A offenbart die Merkmale des Oberbegriffs von Anspruch 1.

Der Erfindung liegt die Aufgabe zugrunde, eine elektrische Maschine anzugeben, bei der ein Eindringen von Flüssigkeiten, insbesondere Schmierstoffen, in die Maschine vermieden, zumindest jedoch auch lebensdauerbedingte Undichtigkeiten zuverlässig erkannt werden.

Diese Aufgabe wird erfindungsgemäß gelöst durch die Merkmale des Anspruchs 1. Vorteilhafte Ausgestaltungen und sind Gegenstand der Unteransprüche.

Hierzu weist die elektrische Maschine ein Maschinengehäuse, das einen Maschineninnenraum umschließt, und ein Flanschlagerschild mit einer Wellendurchführung auf, in deren Bereich ein mit mindestens einer Ablauföffnung kommunizierender Leckageraum vorgesehen ist. Die Ablauföffnungen befinden sich dabei vorzugsweise im Bauraum zwischen der Maschine und dem Getriebe. Auf diese Weise können Flüssigkeiten, insbesondere Schmierstoffe, gezielt abgeleitet und insbesondere Undichtigkeiten im Getriebe oberhalb der Maschine frühzeitig erkannt werden.

Erfindungsgemäß ist eine Ringscheibe vorgesehen, die sich innerhalb des Leckageraums befindet und von der Maschinenwelle wellenfest getragen ist. Mittels der Ringscheibe werden Leckagen, die an der Maschinenwelle entlang fließen, gezieltes in den Leckageraum abgeführt. Während des Betriebs der Maschine rotiert die Ringscheibe mit der Maschinenwelle, so dass infolge des dadurch bedingten Schleudereffektes Leckagen besonders zuverlässig in den Leckageraum geleitet und von dort über die Ablauföffnung nach außerhalb des Maschinengehäuses abgeführt werden.

Die vorzugsweise zwei oder mehr Ablauföffnungen befinden sich geeigneterweise in einem Bauraum zwischen dem Maschinengehäuse und der dem Maschineninnenraum abgewandten Außenseite des Flanschlagerschildes. Besonders bevorzugt ist dabei die oder jede Ablauföffnung im Flanschlagerschild selbst vorgesehen. Entlang der Maschinenwelle befindet sich die oder jede Ablauföffnung im Bereich zwischen dem Maschinenraum und der Ringscheibe, so dass bei einer erfindungsgemäß vertikal ausgerichteten Maschinenwelle und unterhalb der Wellendurchführung befindlichem Maschineninnenraum die jeweilige Ablauföffnung in Längsrichtung der Maschinenwelle unterhalb der Ringscheibe angeordnet ist. Hierdurch ist sichergestellt, dass bei erfindungsgemäß vertikaler Einbaulage sich im Leckageraum sammelnde Flüssigkeit über die entsprechenden Ablauföffnungen zuverlässig und vollständig abfließen kann. Hierzu besonders zweckmäßig ist eine schräge oder geneigte Auslauf- oder Stufenkontur innerhalb des Leckageraums, so dass dieser ausgehend von der Position der Ringscheibe in die Ablauföffnung gefälleartige ausmündet.

Erfindungsgemäß ist die Ringscheibe dazu vorgesehen und eingerichtet, im rotatorischen Betrieb der Maschinenwelle an dieser entlanglaufende Flüssigkeit von der Wellendurchführung in den Leckageraum zu treiben.

In erfindungsgemäßer Ausgestaltung der Ringscheibe weist diese einen Außenring und einen Innenring auf. Während der Außenring erfindungsgemäß einem unelastischen Werkstoff, insbesondere aus einem Stahlblech besteht, ist der vom Außenring gehaltene Innenring elastisch ausgeführt. Die Ringscheibe ist dabei erfindungsgemäß derart ausgestaltet und auf der Maschinenwelle angeordnet, dass der elastische Innenring mit dessen der Maschinenwelle abgewandten Ringaußenkante bei ruhender Maschine an einer Gehäusekontur innerhalb des Leckageraums anliegt und im rotatorischen Betrieb der Maschinenwelle von der Gehäusekontur abhebt.

In zweckmäßiger Ausgestaltung ist der metallische Außenring der Ringscheibe im Bereich der Ringaußenkante unter Bildung eines vorzugsweise umlaufenden axialen Scheibenkragens abgekröpft. Dieser Scheibenkragen greift geeigneterweise mit dessen Kragenaußenkante in eine Gehäusenut der Gehäusekontur innerhalb des Leckageraums ein.

Mit der zweiteiligen Ausführung der Ringscheibe mit innenliegendem elastischem Innenring ist eine zuverlässige Dichtheit zwischen der Ringscheibe und der Wandung des Leckageraums sowie dort zur Maschinenwelle hin bei gleichzeitig besonders geringer Reibung der Ringscheibe während des Betriebs der Maschine erreicht.

Die mit der Erfindung erzielten Vorteile bestehen erfindungsgemäß darin, dass durch Bereitstellung mindestens einer Ablauföffnung im Bereich der Schnittstelle zwischen dem Maschinengehäuse einer elektrischen Maschine und einem mit diesem gekoppelten Getriebe auftretende Leckagen abgeführt werden und somit einerseits das Eindringen von Flüssigkeit, insbesondere von Schmierstoffen, über eine Wellendurchführung in den Maschineninnenraum zuverlässig verhindert wird. Andererseits können Undichtigkeiten zuverlässig erkannt werden.

Zudem ist über die zweckmäßigerweise in einem Flanschlagerschild zwischen der elektrischen Maschine und einem angeflanschten Getriebe angeordnete und dort aus einem Leckageraum ausmündende Ablauföffnung ein Druckausgleich an der Schnittstelle zwischen der drehenden Maschine und dem angebauten System ermöglicht.

Aufgrund der Vermeidung des Eindringens von Flüssigkeiten über die Wellendurchführung in den Maschineninnenraum werden dort angeordnete Bauelemente, beispielsweise ein Bremssystem oder ein optisches Gebersystem, gegen Kurzschlüsse oder vor anderen unerwünschten, Fehler verursachenden Einflüsse infolge eintretender Flüssigkeit zuverlässig geschützt. In Verbindung mit der geeigneterweise als Schleuderscheibe wirksamen wellenfesten Ringscheibe werden an der Maschinenwelle entlang geführte Flüssigkeiten von der Welle im Leckageraum gesammelt und von dort über die Ablauföffnung abgeführt.

Nachfolgend wird ein Ausführungsbeispiel der Erfindung anhand einer Zeichnung näher erläutert. Darin zeigen:
- Fig. 1: in einer Seitenansicht eine elektrische Maschine mit Blick auf eine Ablauföffnung für Leckagen,
- Fig. 2: die elektrische Maschine in einem Längsschnitt entlang der Linie II-II in Fig. 1 mit einer wellenfesten Ringscheibe im Beriech einer Wellendurchführung,
- Fig. 3: einen Ausschnitt III aus Fig. 2 in größerem Maßstab mit der aus einem Leckageraum ausmündenden Ablauföffnung, und
- Fig. 4: die auf der Maschinenwelle wellenfeste Ringscheibe und deren Anbindung an eine Gehäusekontur in teilweise geschnittener Darstellung.

Einander entsprechende Teile sind in allen Figuren mit den gleichen Bezugszeichen versehen.

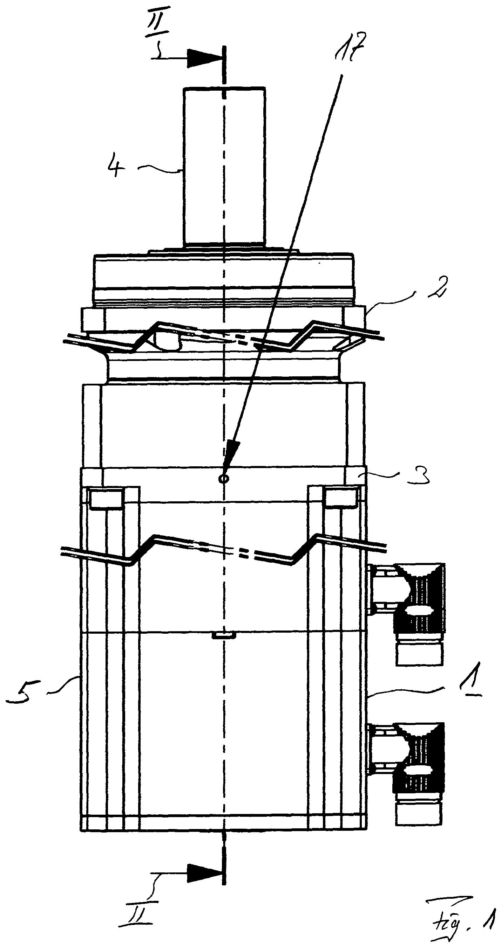

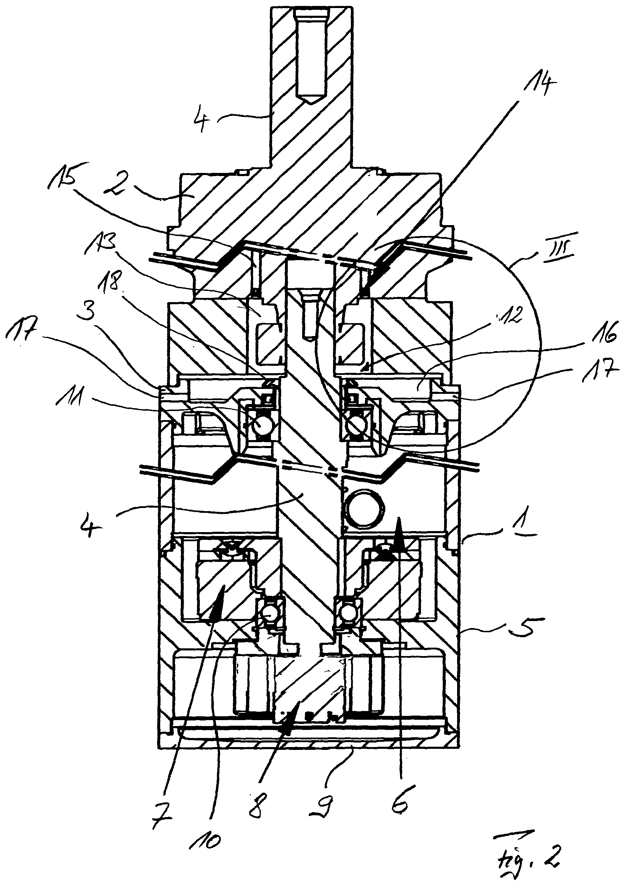

Bei der in den Figuren 1 und 2 dargestellten elektrischen Maschine 1 handelt es sich um einen Elektromotor in vertikaler Anordnung mit über ein A-seitiges Flanschlagerschild 3 angekoppeltem Getriebe 2 sowie über dieses vertikal hinaus geführter Maschinenwelle 4. Das Flanschlagerschild 3 ist mit einem Maschinengehäuse 5 stirnseitig verbunden, der einen Maschineninnenraum 6 umschließt.

Der Maschineninnenraum 6 nimmt zusätzlich zur Maschinen- bzw. Motorwelle 4 gegen Flüssigkeiten zu schützende Bauteile, insbesondere ein Bremssystem 7 sowie ein Gebersystem 8, auf. Auf der dem Flanschlagerschild 3 gegenüberliegenden Stirnseite (B-seitig) ist das Maschinengehäuse 5 mittels eines Lagerschildes 9 verschlossen.

Die innerhalb des Maschinengehäuses 5 in einem B-seitigen Lager 10 sowie einem A-seitigen Lager 11 drehgelagerte Maschinenwelle 4 ist über eine Wellendurchführung 12 über das Flanschlagerschild 3 aus diesem Getriebe 2 herausgeführt. Dort kann die Welle 4 mit einem Aggregat, beispielsweise einer Hydraulikpumpe, zu deren elektromotorischen Antrieb gekoppelt werden.

Das Flanschlagerschild 3 bildet quasi die mechanische Schnittstelle zwischen der elektrischen Maschine 1 und dem Getriebe 2. Ein Getriebeinnenraum 13 ist in der Darstellung gemäß Fig. 2 oberhalb des Flanschlagerschildes 3 mit einem Dichtelement 14 abgedichtet. In Axialrichtung x oberhalb des Dichtelements 14 befinden sich innerhalb des Getriebes 2 weitere Schmierstoffkanäle 15.

Im Bereich der Wellendurchführung 12 befindet sich im Flanschlagerschild 3 ein Leckageraum 16, aus dem im Ausführungsbeispiel zwei Ablauföffnungen 17 ausmünden und hierzu die Wandung des Flanschlagerschildes 3 durchsetzen. Innerhalb dieses Leckageraums 16 wiederrum trägt die Maschinenwelle 4 eine Ringscheibe 18.

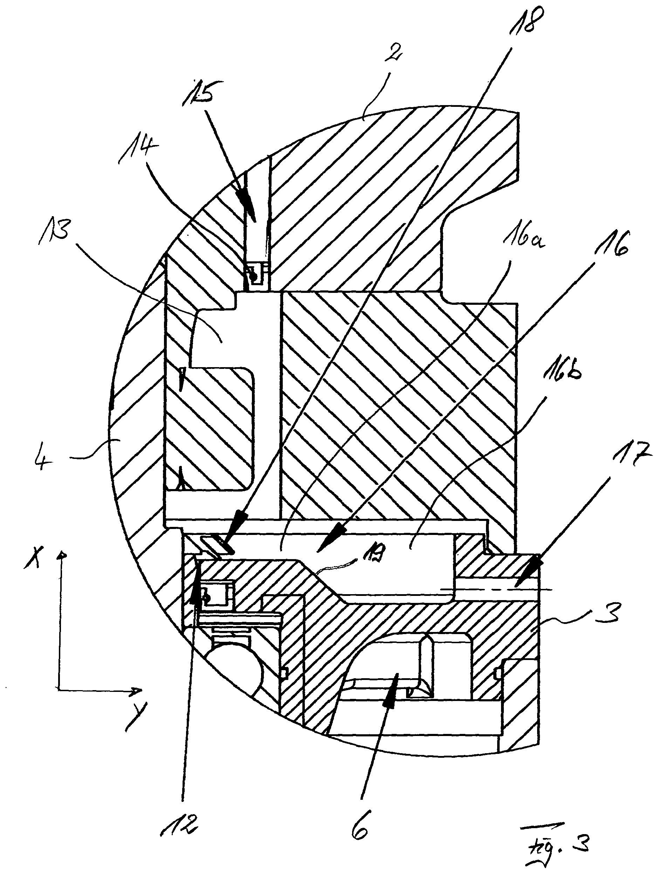

Wie aus Fig. 3 vergleichsweise deutlich ersichtlich ist, befindet sich die Ringscheibe 18 im Bereich der Wellendurchführung 12 und dort in einem in Axialrichtung x relativ schmalen Raumbereich 16a des Leckageraums 16. Dieser weitet sich über eine schräge Gehäusekontur 19 des Flanschlagerschildes 3 gefälleartig in einen vergleichsweise großvolumigen Raumbereich 16b des Leckageraums 16 auf. Der relativ schmale Raumbereich 16a des Leckageraums 16 erstreckt sich in Radialrichtung y bis zur gefälleartigen Gehäusekontur 19 und geht dort in den relativ breiten und sich in Radialrichtung y bis zur Ablauföffnung 17 erstreckenden Raumbereich 16b über, wobei die Ablauföffnung 17 in Axialrichtung x unterhalb der Wellendurchführung 12 und der dortigen Ringscheibe 18 angeordnet ist.

Aus dem Getriebe 2 über den Innenraum 13 und dort entlang der Maschinenwelle 4 ablaufende Flüssigkeiten oder Schmierstoffe werden an der Ringscheibe 18 entlang in den Leckageraum 16 zwangsgeführt und können von dort über die Ablauföffnung 17 abfließen. Solche Leckagen werden somit als Indiz für eine Undichtigkeit, beispielsweise im Bereich des getriebeseitigen Dichtelements 14, erkannt, so dass das beispielsweise lebensdauerbedingt undichte Dichtelement 14 ausgetauscht werden kann.

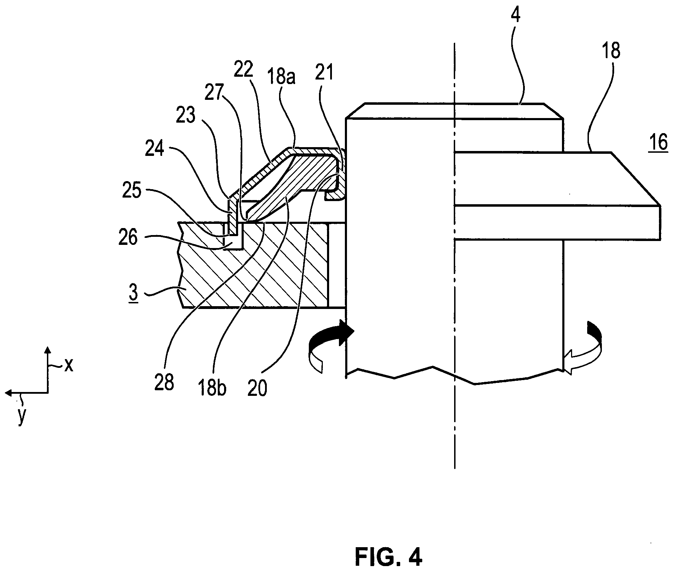

Fig. 4 zeigt eine bevorzugte Ausführungsform der Ringscheibe 18. Diese weist einen starren, beispielsweise aus Edelstahl bestehenden Außenring 18a und einen elastischen, beispielsweise aus einem plastisch-elastischen Kunststoff bestehenden Innenring 18b auf. Dieser liegt mit dessen der Maschinenwelle 4 zugewandten Ringinnenkante 20 innerhalb einer U-förmigen Scheibenkontur 21 des Außenrings 18a ein. Mit der Außenseite des Schenkelzwischenbereiches dieser U-förmigen Scheibenkontur 21 des Außenrings 18a ist die Ringscheibe 18 form- und/oder kraftschlüssig mit der Maschinenwelle 4 und somit wellenfest verbunden.

An die U-förmige Scheibenkontur 21 schließt sich eine geneigte Ablaufkontur 22 des Außenrings 18a an. An diese schräge Ablaufkontur 22 schließt sich über eine Abkröfpung 23 eine in Axialrichtung x verlaufende Kragenkontur als axialer Scheibenkragen 24 an. Die dadurch gebildete Ringaußenkante 25 des Außenrings 18a der Ringscheibe 18 greift in eine Gehäusenut 26 des Flanschlagerschildes 3 mit ausreichendem radialen und axialen Spiel für eine störungsfrei und insbesondere reibungsfreie Rotation der Ringscheibe 18 ein.

Der elastische Innenring 18b der Ringscheibe 18 ist derart gestaltet und innerhalb des Außenrings 18a angeordnet, dass die Ringaußenkante 27 des Innenrings 18b bei stehender Maschine 1 am Flanschlagerschild 3 bzw. an einer dortigen Gehäusekontur 28 in Radialrichtung y vor der Gehäusenut 26 dichtend anliegt.

Im Betrieb der Maschine 1 hebt diese Ringaußenkante 27 des Innenrings 18b aufgrund der Rotation der Maschinenwelle 4 von der Gehäusekontur 28 ab mit der Folge, dass die Ringscheibe 18 praktisch reibungsfrei rotiert. Aufgrund des Einsitzens des Scheibenkragens 25 der Ringscheibe 18 in der Gehäusenut 26 ist während des Betriebs der Maschine 1 ein Eindringen von Flüssigkeit, insbesondere von Schmiermittel, in den zwischen der Gehäusekontur 28 und der Ringscheibe 18 und von dort entlang der Maschinenwelle 4 in den Maschineninnenraum 6 besonders zuverlässig verhindert.

**Bezugszeichenliste**

| | | | |
|---|---|---|---|
| 1 | elektrische Maschine/Motor | 17 | Ablauföffnung |
| 2 | Getriebe | 18 | Ringscheibe |
| 3 | Flanschlagerschild | 18a | Außenring |
| 4 | Maschinen-/Motorwelle | 18b | Innenring |
| 5 | Maschinengehäuse | 19 | schräge Stufenkontur |
| 6 | Maschineninnenraum | 20 | Ringinnenkante |
| 7 | Bremssystem | 21 | U-förmige Scheibenkontur |
| 8 | Gebersystem | 22 | schräge Scheibenkontur |
| 9 | Lagerschild (B-seitig) | 23 | Abkröpfung |
| 10 | B-seitiges Lager | 24 | axialer Scheibenkragen |
| 11 | A-seitiges Lager | 25 | Scheibenaußenkante |
| 12 | Wellendurchführung | 26 | Gehäusenut |
| 13 | Getriebeinnenraum | 27 | Ringaußenkante |
| 14 | Dichtelement | 28 | Gehäusekontur |
| 15 | Schmiermittelkanal | | |
| 16 | Leckageraum | x | Axialrichtung |
| 16a | schmaler Raumbereich | y | Radialrichtung |
| 16b | breiter Raumbereich | | |

## Patentansprüche

1. Elektrische Maschine (1) mit einem einen Maschineninnenraum (6) umschließenden Maschinengehäuse (5) und mit einem Flanschlagerschild (3) sowie mit einem an das Maschinengehäuse (5) gekoppelten Getriebe (2),
- wobei das Flanschlagerschild (3) eine Wellendurchführung (12) für eine Maschinenwelle (4) aufweist und sich der Maschineninnenraum (6) unterhalb der Wellendurchführung (12) befindet,
- wobei die Maschinenwelle (4) vertikal ausgerichtet ist,
- wobei im Flanschlagerschild (3) im Bereich der Wellendurchführung (12) ein Leckageraum (16) vorgesehen ist, der mit mindestens einer Ablauföffnung (17) kommuniziert, wobei die Ablauföffnung (17) im Bereich der Schnittstelle zwischen dem Maschinengehäuse (5) und dem Getriebe auftretende Leckagen abführt, und
- wobei die Maschinenwelle (4) eine innerhalb des Leckageraums (16) angeordnete wellenfeste Ringscheibe (18) trägt, die dazu vorgesehen und eingerichtet ist, im rotatorischen Betrieb der Maschinenwelle (4) an dieser entlanglaufende Flüssigkeit von der Wellendurchführung (12) in den Leckageraum (16) zu treiben,
- wobei die Ablauföffnung (17) in Längsrichtung der Maschinenwelle (4) unterhalb der Ringscheibe (18) angeordnet ist,
- wobei die Ringscheibe (18) einen aus einem unelastischen Werkstoff bestehenden Außenring (18a) aufweist,
**dadurch gekennzeichnet,**
- **dass** die Ringscheibe (18) einen von dem Außenring (18a) gehaltenen elastischen Innenring (18b) aufweist, und
- **dass** die Ringscheibe (18) derart ausgebildet und auf der Maschinenwelle (4) angeordnet ist, dass der elastische Innenring (18b) mit dessen der Maschinenwelle (4) abgewandten Ringaußenkante (27) bei einer ruhenden Maschine an einer Gehäusekontur (28) innerhalb des Leckageraums (16) anliegt und im rotatorischen Betrieb der Maschinenwelle (4) von der Gehäusekontur (28) abhebt.

2. Elektrische Maschine (1) nach Anspruch 1,
**dadurch gekennzeichnet, dass** die Ablauföffnung (17) zwischen dem Maschinengehäuse (5) und der dem Maschineninnenraum (6) abgewandten Außenseite des Flanschlagerschilds (3) vorgesehen ist.

3. Elektrische Maschine (1) nach Anspruch 1 oder 2,
**dadurch gekennzeichnet, dass** die Ablauföffnung (17) im Bereich zwischen dem Maschineninnenraum (6) und der Ringscheibe (18) vorgesehen ist.

4. Elektrische Maschine (1) nach einem der Ansprüche 1 bis 3,
**dadurch gekennzeichnet, dass** der Leckageraum (16) über eine schräge Auslauf- oder Stufenkontur (19) in die Ablauföffnung (17) ausmündet.

5. Elektrische Maschine (1) nach einem der Ansprüche 1 bis 4,
**dadurch gekennzeichnet, dass** der Außenring (18a) der Ringscheibe (18) im Bereich deren der Maschinenwelle (4) abgewandten Ringaußenkante (25) unter Bildung eines zumindest annähernd axialen Scheibenkragens (24) abgekröpft ist, der in eine zur Maschinenwelle (4) radial beabstandete Gehäusenut (26) eingreift.

## Claims

1. Electrical machine (1) with a machine housing (5) enclosing a machine interior space (6) and with a flanged bearing shield (3) as well as with a transmission coupled to the machine housing (5),
- wherein the flanged bearing shield (3) has a shaft passage (12) for a machine shaft (4) and the machine interior space (6) is located below the shaft passage (12),
- wherein the machine shaft (4) is vertically aligned,
- wherein a leakage space (16) is provided in the flanged bearing shield (3) in the region of the shaft passage (12), said leakage space (16) communicating with at least one outlet opening (17), wherein the outlet opening (17) discharges any leakage occurring in the region of the interface between the machine housing (5) and the gearbox, and
- wherein the machine shaft (4) carries a shaft-fixed ring disc (18) arranged within the leakage space (16), which ring disc (18) is provided and designed to force liquid running along the machine shaft (4) from the shaft passage (12) into the leakage space (16) during rotary operation of the machine shaft (4),
- wherein the outlet opening (17) is arranged below the ring disc (18) in the longitudinal direction of the machine shaft (4),
- wherein the ring disc (18) has an outer ring (18a) made of a non-resilient material,
**characterized in**
- **that** the ring disc (18) has an elastic inner ring (18b) held by the outer ring (18a), and
- **that** the ring disc (18) is designed and arranged on the machine shaft (4) in such a way that the elastic inner ring (18b), with its outer ring edge (27) facing away from the machine shaft (4), bears against a housing contour (28) within the leakage space (16) in case of a stationary machine and lifts off from the housing contour (28) during rotary operation of the machine shaft (4).

2. Electrical machine (1) according to claim 1,
**characterized in that** the outlet opening (17) is provided between the machine housing (5) and the outer side of the flanged bearing shield (3) facing away from the machine interior space (6).

3. Electrical machine (1) according to claim 1 or 2,
**characterized in that** the outlet opening (17) is provided in the region between the machine interior space (6) and the ring disc (18).

4. Electrical machine (1) according to one of claims 1 to 3,
**characterized in that** the leakage space (16) opens into the outlet opening (17) via an inclined outlet or step contour (19).

5. Electrical machine (1) according to one of claims 1 to 4,
**characterized in that** the outer ring (18a) of the ring disc (18) is cranked in the region of its ring outer edge (25) facing away from the machine shaft (4), to form an at least approximately axial disc collar (24), which engages in a housing groove (26) radially spaced apart from the machine shaft (4).

## Revendications

1. Machine électrique (1) avec un carter de machine (5) enfermant un intérieur de machine (6) et avec un flasque à brides (3) ainsi qu'avec une transmission couplée au carter de machine (5),
- dans laquelle le flasque à brides (3) comprend un passage d'arbre (12) pour un arbre de machine (4) et l'intérieur de la machine (6) est situé en dessous du passage d'arbre (12),
- dans laquelle l'arbre de machine (4) est aligné verticalement,
- dans laquelle une espace de fuite (16) est prévue dans le flasque à brides (3) dans la région du passage d'arbre (12), ladite espace de fuite communiquant avec au moins une ouverture de décharge (17), dans laquelle l'ouverture de décharge (17) évacue toute fuite se produisant dans la région de l'interface entre le carter de machine (5) et la transmission, et
- dans laquelle l'arbre de machine (4) porte un disque annulaire (18) fixé à l'arbre et disposé à l'intérieur de l'espace de fuite (16), lequel disque annulaire (18) est prévu et conçu pour entraîner le liquide s'écoulant le long de l'arbre de machine (4) depuis le passage d'arbre (12) dans l'espace de fuite (16) pendant le fonctionnement en rotation de l'arbre de machine (4),
- dans laquelle l'ouverture de décharge (17) est disposée au-dessous du disque annulaire (18) dans la direction longitudinale de l'arbre de machine (4),
- dans laquelle le disque annulaire (18) comprend une bague extérieure (18a) constituée d'un matériau non-élastique,
**caractérisée en ce**
- **que** le disque annulaire (18) comprend une bague intérieure élastique (18b) maintenue par la bague extérieure (18a), et
- **que** le disque annulaire (18) est conçu et disposé sur l'arbre de machine (4) de telle sorte que l'anneau intérieur élastique (18b) s'appuie avec son bord d'anneau extérieur (27) opposé à l'arbre de machine (4) sur un contour de boîtier (28) à l'intérieur de l'espace de fuite (16) lorsque la machine est au repos et se détache du contour de boîtier (28) lors de la rotation de l'arbre de machine (4).

2. Machine électrique (1) selon la revendication 1,
**caractérisée en ce que** l'ouverture de décharge (17) est prévue entre le carter de machine (5) et le côté extérieur du flasque à brides (3), qui est opposé à l'intérieur de la machine (6).

3. Machine électrique (1) selon la revendication 1 ou 2,
**caractérisée en ce que** l'ouverture de décharge (17) est prévue dans la région entre l'intérieur de la machine (6) et le disque annulaire (18).

4. Machine électrique (1) selon l'une des revendications 1 à 3,
**caractérisée en ce que** l'espace de fuite (16) débouche dans l'ouverture de décharge (17) par un contour de sortie ou de marche incliné (19).

5. Machine électrique (1) selon l'une des revendications 1 à 4,
**caractérisée en ce que** la bague extérieure (18a) du disque annulaire (18) est coudée dans la région de son bord extérieur annulaire (25) opposé à l'arbre de machine (4), en formant un collet de disque (24) au moins approximativement axial, qui s'engage dans une rainure de logement (26) radialement espacée de l'arbre de machine (4).
